Europäisches Patentamt

European Patent Office

Office européen des brevets

(11) Publication number: **0 273 511 B1**

(12) **EUROPEAN PATENT SPECIFICATION**

(45) Date of publication of patent specification: **03.07.91** (51) Int. Cl.⁵: **B65H 75/22**

(21) Application number: **87202517.6**

(22) Date of filing: **15.12.87**

(54) Collapsible reel.

(30) Priority: **22.12.86 NL 8603248**

(43) Date of publication of application:
**06.07.88 Bulletin 88/27**

(45) Publication of the grant of the patent:
**03.07.91 Bulletin 91/27**

(84) Designated Contracting States:
**DE FR GB NL**

(56) References cited:
**DE-A- 3 515 931**
**GB-A- 799 989**
**US-A- 3 284 022**
**US-A- 3 853 286**

(73) Proprietor: **N.V. Philips' Gloeilampenfabrieken**
**Groenewoudseweg 1**
**NL-5621 BA Eindhoven(NL)**

(72) Inventor: **Winters, Leo Mathieu**
**c/o INT. OCTROOIBUREAU B.V. Prof. Holst-**
**laan 6**
**NL-5656 AA Eindhoven(NL)**

(74) Representative: **Melio, Jan Dirk et al**
**INTERNATIONAAL OCTROOIBUREAU B.V.**
**Prof. Holstlaan 6**
**NL-5656 AA Eindhoven(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The invention relates to a collapsible reel which is composed of two identical halves each consisting of a flat annular flange having a central opening and a number of expansion members, which are arranged near the central opening, are regularly distributed in the circumferential direction, are bounded by incisions and by ribs extending transversely thereto and each have a securing vane and a bridge part, the securing vane being joined to the bridge part by a folding rib and the bridge part being joined to the flange by a hinge rib extending parallel to the folding rib, the two reel halves being joined by means of the securing vanes to form a reel which can be extended due to a relative movement of the two reel halves, the bridge parts constituting the reel core.

For storing, packing and transporting tape-and ribbon-shaped products and products packed in tape, strip or ribbon material, such as electric and electronic components, use is preferably made of reels. Especially due to the fact that SMD components are increasingly processed mechanically, the reels of different dimensions and of different constructions are increasingly employed.

In order to ensure that empty reels can be supplied to the user as efficiently as possible and with a minimum of transport volume, use is preferably made of collapsible reels, which, when empty and in the collapsed state, occupy little volume and which can be extended by the user in situ by a simple operation in order to arrange the products to be packed on the reel.

Such a collapsible reel of the kind described in the opening paragraph is known from US PS 3,284,022. In order to extend this reel and to make it ready for use, the two flanges must be pulled away from each other in the axial direction. The reel flanges compressed during the assembly and during the transport can often be separated from each other only with difficulty. The operation of pulling the reel halves away from each other cannot readily be controlled and may be effected shockwise so that the risk of damage of the reel by tearing is fairly high.

Another collapsible reel is known from DE 3.515.931. This known reel comprises two rectangular flanges provided with incisions perpendicular to one side of the flanges and hinge and folding ribs extending perpendicular to the other side of the flanges.

In order to extend this reel a relative translational movement of the two flanges has to be performed. When this reel is mounted on an axis to wind or unwind a tape on the reel, the reel due to the forces excerted by the bridge parts wants to get back in its flat position and thereby takes an inclined position to the axis. In this inclined position the winding and unwinding of the reel is disturbed.

The invention has for its object to provide a collapsible reel which can be brought into the condition ready for use in a simple manner by a simple and satisfactory controllable operation and with comparatively little effort.

According to the invention, this object is mainly achieved in that the incisions extend substantially in or tangentially to the circumferential direction of the central opening and in that the folding ribs and the hinge ribs extend substantially perpendicular to the circumferential direction of the central opening. The reel can be extended by a relative rotational movement of the two reel halves.

The rotational movement can be effected with little effort and uniformly so that the risk of damage of the reel by tearing, especially with the use of thin-walled material, is small. The angular rotation to be performed can be satisfactorily controlled.

A preferred embodiment of the collapsible reel according to the invention is characterized in that the expansion members take the form of an annular segment and are bounded by a loop-shaped incision composed of lines of a circle.

The characteristic form and location of the expansion members has the consequence that due to the hinge effect of the folding ribs and the hinge ribs the two flanges are moved apart in the axial direction merely by a relative displacement of the two reel halves in the circumferential direction. No problems are involved in separating the two flanges from each other because the axial expansion movement of the two reel flanges is an inevitable consequence of their relative rotational movement.

Another preferred embodiment of the collapsible reel according to the invention is characterized in that the folding rib and the hinge rib enclose an acute angle with a radius intersecting the relevant rib. Thus, it is achieved that the centre line of the ribs extends at a certain distance from the centre of the central opening and on either side thereof and that the ribs are inclined slightly backwards with respect to the free end of the expansion member. Due to the fact that the ribs are inclined backwards, a wringing effect or torsional effect is exerted on the bridge parts as a result of the relative rotational movement of the flanges in such a manner that the bridge parts pivot in the correct desired direction of rotation. Moreover, the flanges can more readily be separated due to the torsional effect.

According to the invention, another preferred embodiment of the reel is characterized in that the incisions are widened in such a manner that the expansion members are not in contact with the flange along the incision. Due to this step it is avoided that the expansion members, more particularly the securing vanes, hook on to the flange, as a result of which a larger force has to be exerted at the beginning of the relative displacement, which involves the risk of damage to the reel. Due to the fact that the expansion members are wholly disengaged along their incised circumference, the hinge effect of the folding rib and the hinge rib is facilitated.

The hinge effect of the hinge rib and the operation of separating the flanges are further facilitated in another embodiment of the reel according to the invention, which for this purpose is characterized in that an incision is provided in the hinge rib.

According to the invenion, a further preferred embodiment of the collapsible reel is characterized by reference openings which are provided in the flanges. When during the operation of joining the two reel halves and during the operation of extending the reel the reference openings in the two flanges are caused to coincide in the correct manner, the correct assembly position of the two reel halves as well as the maximum relative rotational movement and hence the correct position of the reel halves in the extended condition can be controlled in a simple manner.

A simple visual control of the degree of filling of the reel is possible in a further embodiment of the reel, by providing in the flanges control openings which are distributed along the circumferential direction and which overlap each other in the radial direction.

For winding the product to be packed onto the reels, the reels should generally be driven. For this purpose, a preferred embodiment of the reel according to the invention is characterized in that follower slots, which are regularly distributed along the circumference of the central opening, are provide in the flanges in such a manner that in the assembled condition of the reel the follower slots coincide pairwise. The relative angular position of the follower slots in the two flanges in the collapsed state of the reel depends upon the width of the bridge part and hence upon the necessary angular rotation of the two reel halves.

The reel halves may be made of different materials. Frequently used materials are cardboard, corrugated cardboard, synthetic material and the like. Due to the steps according to the invention, there is a possibility of using for the composition of the reel thin-walled materials with a minimum risk of damage during the manipulation of the reel.

In the first instance, the reels will be composed by the manufacturer or the supplier of two identical halves. Of course there is also the possibility for the reels to be composed by the user himself.

The invention will be described more fully with reference to the drawing. In the drawing:

Fig. 1 shows a pretreated blank for a reel half,

Fig. 2 shows a reel composed of two identical halves in the flat transport state,

Fig. 3 shows the reel in the extended operating condition after a relative rotation of the two reel halves,

Fig. 4 shows the extended reel, viewed in the direction of the arrow IV in Fig. 3,

Fig. 5 shows another embodiment of the reel,

Fig. 6 is a perspective view of a reel ready for use.

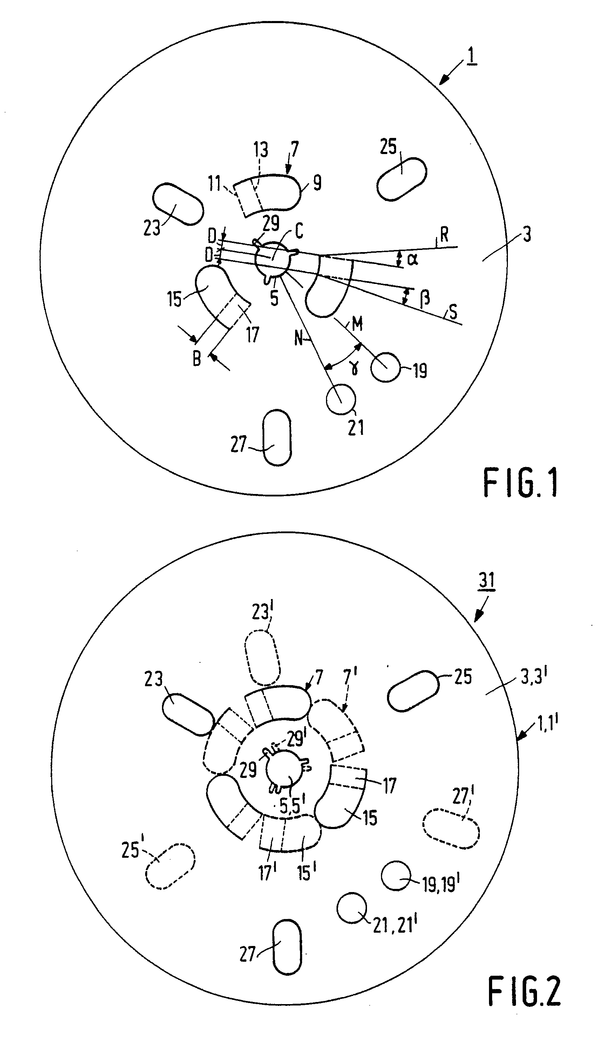

Fig. 1 shows a flat blank for a reel half 1 consisting of a flat annular flange 3 having a central opening 5 and a number of expansion members 7 arranged near the central opening and distributed regularly in the circumferential direction. These expansion members take the form of an annular segment which is bounded by a loop-shaped incision 9 composed of lines of a circle and by an impressed folding rib 11 which is at right angles to the incision and by means of which the expansion member is hinged to the flange 3. The end of the expansion member 7 remote from the folding rib 11 is free.

Due to an impressed hinge rib 13, the expansion members are subdivided into a securing vane 15 and a bridge part 17 having a width B. The folding rib 11 and the hinge rib 13 are parallel to each other and enclose an acute angle $\alpha$ and $\beta$ with a radius R and S, respectively, which intersects the relevant rib, the ribs being situated with their prolonged parts at a certain distance D on either side of the centre C of the central opening 5. The ribs 11 and 13 are slightly inclined backwards with respect to the free end of the expansion members 7.

The flange 3 is provided with two reference openings 19, 21 at the same distance from the centre C of the opening 5. The radii M and N through the centre of the reference openings 19 and 21 enclose an angle $\gamma$. Further, the flange is provided with three control openings 23, 25 and 27 at different distances from the centre C. Along the periphery of the central opening 5, follower slots 29 are provided, which are uniformly distributed in the circumferential direction.

Fig. 2 shows a reel 31, which is composed of two identical reel halves located one above the other in face to face relationship, the upper reel half being designated by reference numeral 1 and the lower reel half being designated by reference numeral 1' for the sake of clarity. The two halves can be joined by riveting the securing vanes 15 and 15' of one half to the flanges 3' and 3 of the other half. However, the vanes 15, 15' are preferably glued to the flanges 3', 3. Fig. 2 illustrates that in the shown collapsed flat condition of the reel 31 the expansion members 7 and 7', the control openings 23 and 23', 24 and 24', 25 and 25' and the follower slots 29 and 29' are relatively offset in the circumferential direction and do not overlap each other. The coinciding reference openings 19, 19′ and 21, 21′ indicate that the reel 31 is still in the flat collapsed condition.

The folding ribs 11, 11′ and the hinge ribs 13,13′ are arranged so that by a simple relative rotation of the two flanges in the direction of the free end of the expansion members 7, 7′ the bridge parts 17, 17′ will pivot about these ribs, the two flanges will be disengaged from each other and the reel is extended.

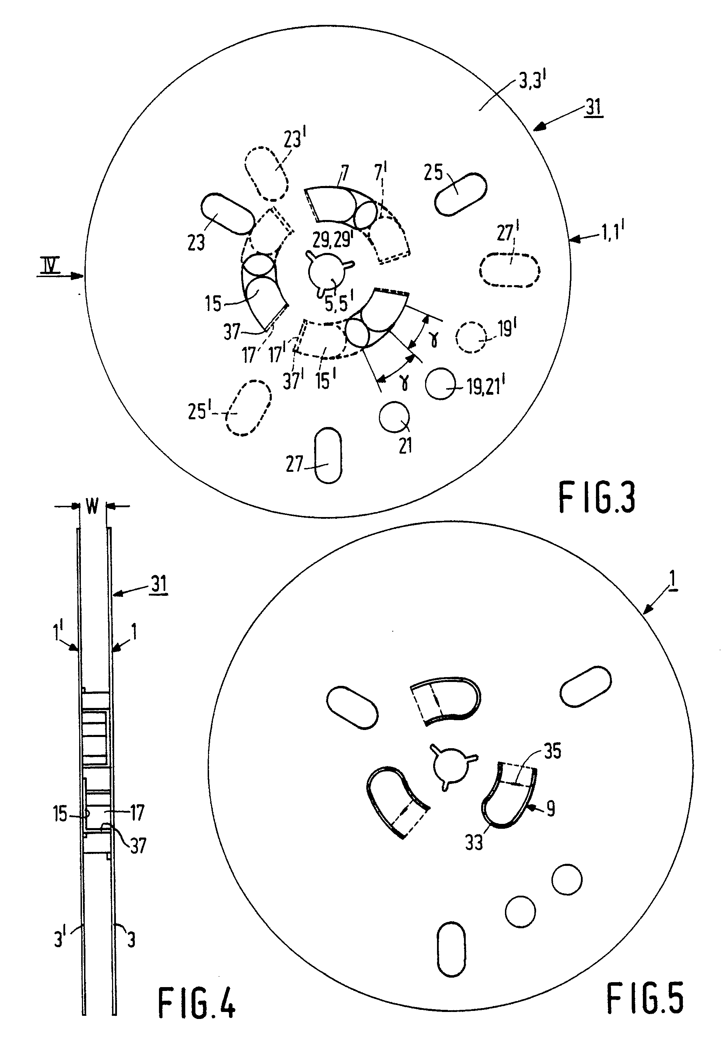

Figures 3 and 4 show the reel 31 in the extended condition ready for use. Due to the fact that, as already described, the folding ribs 11,11′ and the hinge ribs 13, 13′ are inclined backwards, a wringing moment or torsion is exerted on the bridge parts 17, 17′ during the rotation of the flanges 3, 3′ in such a manner that the bridge parts pivot in the correct desired direction, that is to say inwards, viewed in the axial direction, and that the flanges 3, 3′ are moved apart. Fig. 3 illustrates that in the extended condition of the reel 31 the follower slots 29, 29′ coincide pairwise and that the reference opening 19 coincides with reference opening 21′, which provides a visual indication that the two flanges 3, 3′ are relatively displaced through the maximum permissible angle, that is to say through the angle $\gamma$. The angle $\gamma$ is determined by the width B of the bridge part 17. This width B again determines the free distance W between the flanges 3, 3′.

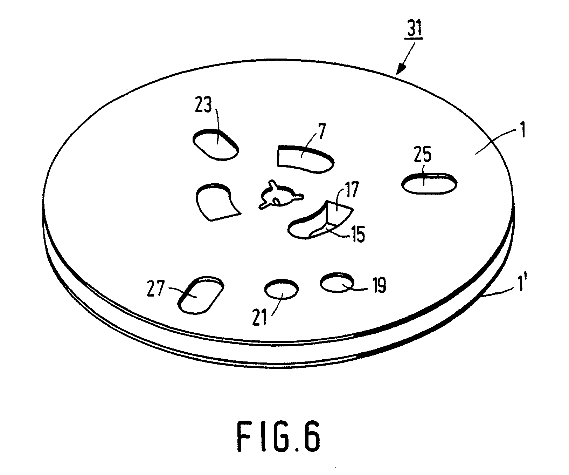

In the embodiment of the reel half 1, shown in Fig. 5, the loop-shaped incision 9 is widened to form a gap 33 in such a manner that the expansion member in the non-deformed state is disengaged with certainty along the incision, as a result of which the extension of the reel is facilitated. The extension of the reel is further facilitated in that an incision 35 is provided in the hinge rib 13.

Due to the concentric annular profile of the expansion members 7, 7′ and due to the fact that the bridge parts 17, 17′ are relatively offset in the circumferential direction, the expansion members and more particularly the bridge parts are located on a circle in the extended condition of the reel with their free edge 37 directed radially outwards and constitute a reel core having approximately a cyclindrical shape.

The reel according to the invention is inexpensive and is intended in the first instance for one-way use; however, if desired, the emptied reel may be collapsed again and may be kept ready for further use.

## Claims

1. A collapsible reel (31) which is composed of two identical halves (1, 1') each consisting of a flat annular flange (3, 3') having a central opening (5, 5') and a number of expansion members (7, 7') which are arranged near the central opening (5, 5'), are regularly distributed in the circumferential direction, are bounded by incisions (9, 9') and by ribs (11-13') transversely thereto and each have a securing vane (15, 15') and a bridge part (17, 17'), the securing vane (15, 15') being joined to the bridge part (17, 17') by a hinge rib (13, 13') and the bridge part (17, 17') being joined to the flange (3, 3') by a folding rib (11, 11') extending parallel to the hinge rib (13, 13'), the two reel halves (1, 1') being joined by means of the securing vanes (15, 15') to form a reel (31) which can be extended due to a relative movement of the two reel halves (1, 1'), the bridge parts (17, 17') constituting the reel core, characterized in that the incisions (9, 9') extend substantially in or tangentially to the circumferential direction of the central opening (5, 5') and in that the folding ribs (11, 11') and the hinge ribs (13,13') extend substantially perpendicular to the circumferential direction of the central opening (5, 5').

2. A collapsible reel (31) as claimed in Claim 1, characterized in that the expension members (7, 7') take the form of an annular segment and are bounded by a loop-shaped incision (9, 9') composed of lines of a circle.

3. A collapsible reel (31) as claimed in Claims 1 or 2, characterized in that the folding rib (11, 11') and the hinge rib (13, 13') enclose an acute angle with a radius intersecting the relevant rib.

4. A collapsible reel (31) as claimed in Claims 1, 2 or 3, characterized in that the incisions (9, 9') are widened in such a manner that the expansion members (7, 7') are not in contact with the flange (3, 3') along the incision (9, 9').

5. A collapsible reel (31) as claimed in any one of Claims 1 to 4, characterized in that an incision (35) is provided in the hinge rib (13, 13').

6. A collapsible reel (31) as claimed in any one of Claims 1 to 5, characterized by reference openings (19-21') which are provided in the flanges (3, 3').

7. A collapsible reel (31) as claimed in any one of Claims 1 to 6, characterized by providing in the flanges (3, 3') control openings (23-27') which are distributed in the circumferential direction and which overlap each other in the radial direction.

8. A collapsible reel (31) as claimed in any one of the preceding Claims, characterized in that follower slots (29, 29') regularly distributed along the circumference of the central opening are provided in the flanges (3, 3') in such a manner that in the assembled condition of the reel the follower slots (29, 29') coincide pairwise.

9. A collapsible reel (31) as claimed in any one of the preceding Claims, characterized in that the reel halves (1, 1') are made of cardboard.

10. A collapsible reel (31) as claimed in any one of Claims 1 to 8, characterized in that the reel halves (1, 1') are made of synthetic material.

11. A reel half (1, 1') suitable to be joined with a second identical reel half to form a collapsible reel (31) as claimed in any one of Claims 1 to 10.

**Revendications**

1. Bobine pliante (31) composée de deux moitiés identiques (1, 1') constituées chacune d'un flasque annulaire plat (3, 3') ayant une ouverture centrale (5, 5') et un certain nombre d'éléments d'extension (7, 7') disposés près de l'ouverture centrale (5, 5'), répartis régulièrement dans la direction circonférentielle et limités par des incisions (9, 9') et par des nervures (11-13') s'étendant transversalement à celles-ci, éléments d'extension qui présentent chacun une languette de fixation (15, 15') et une partie en pont (17, 17'), la languette de fixation (15, 15') étant reliée à la partie en pont (17, 17') par une nervure de pivotement (13, 13') et la partie en pont (17, 17') étant reliée au flasque (3, 3') par une nervure de pliage (11, 11') s'étendant parallèlement à la nervure de pivotement (13, 13'), les deux moitiés de bobine (1, 1') étant reliées au moyen des languettes de fixation (15, 15') pour former une bobine (31) pouvant être étendue par un mouvement relatif des deux moitiés de bobine (1, 1'), les parties en pont (17, 17') constituant le moyeu de la bobine, caractérisée en ce que les incisions (9, 9') s'étendent sensiblement dans la direction circonférentielle de l'ouverture centrale (5, 5') ou tangentiellement à cette direction et en ce que les nervures de pliage (11, 11') et les nervures de pivotement (13, 13') s'étendent sensiblement perpendiculairement à la direction circonférentielle de l'ouverture centrale (5, 5').

2. Bobine pliante (31) selon la revendication 1, caractérisée en ce que les éléments d'extension (7, 7') prennent la forme d'un segment annulaire et sont limités par une incision en forme de boucle (9, 9') composée de lignes d'un cercle.

3. Bobine pliante (31) selon les revendications 1 ou 2, caractérisée en ce que la nervure de pliage (11, 11') et la nervure de pivotement (13, 13') forment un angle aigu avec un rayon coupant la nervure en question.

4. Bobine pliante (31) selon les revendications 1, 2 ou 3, caractérisée en ce que les incisions (9, 9') sont élargies de manière que les éléments d'extension (7, 7') ne sont pas en contact avec le flasque (3, 3') le long de l'incision (9, 9').

5. Bobine pliante (31) selon l'une quelconque des revendications 1 à 4, caractérisée en ce qu'une incision (35) est prévue dans la nervure de pivotement (13, 13').

6. Bobine pliante (31) selon l'une quelconque des revendications 1 à 5, caractérisée par des ouvertures de référence (19-21') pratiquées dans les flasques (3, 3').

7. Bobine pliante (31) selon l'une quelconque des revendications 1 à 6, caractérisée en ce que, dans les flasques (3, 3'), sont pratiquées des ouvertures de contrôle (23-27') qui sont réparties dans la direction circonférentielle et qui se chevauchent dans la direction radiale.

8. Bobine pliante (31) selon l'une quelconque des revendications précédentes, caractérisée en ce que des fentes d'entraînement, (29, 29') réparties régulièrement le long de la circonférence de l'ouverture centrale, sont prévues dans les flasques (3, 3') de manière que, dans l'etat montée de la bobine, les fentes d'entraînement (29, 29') coïncident par paires.

9. Bobine pliante (31) selon l'une quelconque des revendications précédentes, caractérisée en ce que les moitiés de bobine (1, 1') sont en carton.

10. Bobine pliante (31) selon l'une quelconque des revendications 1 à 8, caractérisée en ce que les moitiés de bobine (1, 1') sont en matériau synthétique.

11. Moitié de bobine (1, 1') appropriée à être reliée à une deuxième moitié de bobine identique pour former une bobine pliante (31) selon l'une quelconque des revendications 1 à 10.

**Ansprüche**

1. Zusammenlegbare Spule (31), die aus zwei identischen Hälften (1, 1') zusammengestellt ist, die aus je einem flachen, ringförmigen Flansch (3, 3') mit einer zentralen Öffnung (5,5') und einer Anzahl in der Nähe der zentralen Öffnung (5,5') vorgesehener, in der Umfangsrichtung regelmäßig verteilter durch Einschnitte (9,9') und durch quer darauf stehende Rillen (11-13') begrenzter Expansionsteile (7,7') bestehen, mit je einem Befestigungslappen (15, 15') und einem Steg (17, 17'), wobei der Befestigungslappen (15, 15') durch eine Scharnierrille (13, 13') mit dem Steg (17, 17') verbunden ist und der Steg (17, 17') durch eine sich parallel zu der Schannierrille (13, 13') erstreckende Faltrille (11, 11') mit dem Flansch (3,3') verbunden ist, wobei die beiden Spulenhälften (1, 1') mittels der Befestigungslappen (15, 15') miteinander verbunden sind zum Bilden einer Spule (31), die durch eine relative Drehbewegung der beiden Spulenhälften (1, 1') entsteht, wobei die Stege (17, 17') den Spulenkern bilden, **dadurch gekennzeichnet,** daß die Einschnitte (9, 9') sich im wesentlichen in der Umfangsrichtung der zentralen Öffnung (5,5') oder tangentiell dazu erstrecken und daß die Faltrillen (11, 11') und die Scharnierrillen (13, 13') sich im wesentlichen senkrecht zu der Umfangsrichtung der zentralen Öffnung (5,5') erstrecken.

2. Zusammenlegbare Spule (31) nach Anspruch 1, **dadurch gekennzeichnet,** daß die Expansionsteile (7,7') die Form eines ringförmigen Segmentes haben und durch einen schleifenförmigen aus Kreislinien zusammengestellten Einschnitt (9,9') begrenzt werden.

3. Zusammenlegbare Spule (31) nach Anspruch 1 oder 2, **dadurch gekennzeichnet,** daß die Faltrille (11, 11') und die Scharnierrille (13, 13') mit einem die betreffende Rille scheidenden Strahl einen scharfen Winkel einschließen.

4. Zusammenlegbare Spule (31) nach Anspruch 1,2 oder 3, **dadurch gekennzeichnet,** daß die Einschnitte (9,9') derart verbreitert sind, daß die Expansionsteile (7,7') den Flansch (3,3') längs des Einschnittes (9,9') nicht berühren.

5. Zusammenlegbare Spule (31) nach einem der Ansprüche 1 bis 4, **dadurch gekennzeichnet,** daß in der Scharnierrille (13, 13') ein Einschnitt (35) vorgesehen ist.

6. Zusammenlegbare Spule (31) nach einem der Ansprüche 1 bis 5, **gekennzeichnet,** durch Bezugsöffnungen (19-21'), die in den Flanschen (3, 3') vorgesehen sind.

7. Zusammenlegbare Spule (31) nach einem der Ansprüche 1 bis 6, **dadurch gekennzeichnet,** daß in den Flanschen (3, 3') Kontrollöffnungen (23-27') vorgesehen sind, die in der Umfangsrichtung verteilt sind und einander in der radialen Richtung überlappen.

8. Zusammenlegbare Spule (31) nach einem der vorstehenden Ansprüche, **dadurch gekennzeichnet,** daß in den Flanschen (3,3') regelmäßig verteilt über den Umfang der zentralen Öffnung Mitnehmerschlitze (29,29') derart vorgesehen sind, daß in dem Gebrauchszustand der Spule die Mitnehmerschlitze (29,29') parrweise zusammenfallen.

9. Zusammenlegbare Spule (31) nach einem der vorstehenden Ansprüche, **dadurch gekennzeichnet,** daß die Spulenhälften (1, 1') aus Pappe hergestellt sind.

10. Zusammenlegbare Spule (31) nach einem der Ansprüche 1 bis 8, **dadurch gekennzeichnet,** daß die Spulenhälften (1, 1') aus Kunststoff hergestellt sind.

11. Spulenhälfte (1, 1'), dazu geeignet, mit einer zweiten identischen Spulenhälfte verbunden zu werden, zum Bilden einer zusammenlegbaren Spule (31) nach einem der Ansprüche 1 bis 10.

FIG.1

FIG.2

7

FIG.3

FIG.4

FIG.5

FIG.6